# EUROPEAN PATENT SPECIFICATION

(11) **EP 2 682 683 B1**
(45) Date of publication and mention of the grant of the patent: **05.06.2019**
(21) Application number: 11874268.3
(22) Date of filing: 21.10.2011
(51) Int. Cl.: F24F 1/00, F24F 3/16

(54) **AIR CONDITIONING APPARATUS**
KLIMAANLAGE
APPAREIL DE CLIMATISATION

(43) Date of publication of application: 08.01.2014
(73) Proprietor: Mitsubishi Electric Corporation, Tokyo 100-8310 (JP)
(72) Inventor: FURUHASHI, Takuya, Tokyo 100-8310 (JP); MORIOKA, Reiji, Tokyo 100-8310 (JP)
(74) Representative: Pfenning, Meinig & Partner mbB
(86) International application number: PCT/JP2011/074271
(87) International publication number: WO 2013/057828

(56) References cited:
- EP-A2- 1 079 184
- WO-A1-2010/089920
- JP-A- H04 346 851
- JP-A- 2001 227 766
- JP-A- 2004 177 008
- JP-A- 2004 218 990
- JP-A- 2005 074 389
- JP-A- 2005 156 101
- JP-A- 2005 207 675
- JP-A- 2007 007 589
- JP-A- 2007 021 411

## Description

### Technical Field

The present invention relates to an air conditioning apparatus.

### Background Art

Conventionally, an air conditioning apparatus including an electric precipitation type air cleaning filter close to a upwind side of a heat exchanger is known (for example, see Patent Literature 1). In the electric precipitation type air cleaning filter provided in the conventional air conditioning apparatus, a charged filter to be a counter electrode is placed substantially in parallel with an end surface on the upwind side of the heat exchanger. A conventional electric precipitator is also known in which a counter electrode (ground electrode) of an ionization unit is placed to be tilted in a ventilation direction in order to reduce a thickness of the electric precipitator (for example, see Patent Literature 2).

### Citation List

### Patent Literature

Patent Literature 1: Japanese Patent Publication No. 06-074903
Patent Literature 2: Japanese Patent No. 3605206
   EP 1 079 184 A2 discusses an air conditioner including: a front panel 30 having a first air inlet 31 formed on the front face, a second air inlet 32 formed on the top face facing the ceiling surface of the room and a third air inlet 33 formed between the first and second air inlets 31 and 32, the front panel 30 also having an air outlet 40 formed on the lower side of the front face of the front panel 30; a heat exchanger 50, a fan 60 and an electrostatic precipitator 70 provided in an air passage in the front panel 30 ranging from the air inlets 31, 32 and 33 to the air outlet 40, the heat exchanger 50 divided into three heat exchangers 51 to 53 arranged in a Λ shape, the electrostatic precipitator 70 provided above the second heat exchanger 52 so as to face the third air inlet 33.

### Summary of Invention

### Technical Problem

There are several types of blower fans used in an air conditioning apparatus, including, for example, a sirocco fan, a propeller fan, and a line flow fan, and an appropriate type of blower fan to be used is selected depending on use of the air conditioning apparatus or desired characteristics. For example, the sirocco fan is small and provides high wind pressure but a rather small air volume, and the propeller fan provides relatively low wind pressure but is suitable for obtaining a relatively large air volume.

When the propeller fan is used as a blower fan in an air conditioning apparatus, relatively low wind pressure is obtained, and thus pressure loss has a greater influence when air passes through an electric precipitation type filter, an electric discharge/electric field-generating device, or a heat exchanger. Also, the propeller fan is an axial fan that generates wind (air flow) in a direction parallel to a rotating shaft of the fan, and a speed and a volume of an air flow are different between a portion closer to the shaft of the propeller fan and a portion of blades (rotary blades).

However, in the conventional air conditioning apparatus shown in Patent Literature 1, the counter electrode (charged filter) of the electric precipitation type air cleaning filter is placed substantially perpendicularly to a direction of an air flow, which increases pressure loss, causes a reduction in air volume or noise, and increases power consumption. Also, this air conditioning apparatus does not at all consider the characteristic of the propeller fan as described above, and does not have an appropriate configuration considering heat exchange efficiency of a heat exchanger and pressure loss of the heat exchanger and an electric discharge/electric field-generating device when a propeller type axial fan is used as a blower fan. Further, also when a line flow fan is used as a blower fan, a great influence is exerted on an air flow from the blower fan.

Also, the conventional electric precipitator disclosed in Patent Literature 2 does not consider a case where the electric precipitator is provided in an air conditioning apparatus nor consider the characteristic of the propeller fan as described above. Thus, like the apparatus described in Patent Literature 1, the electric precipitator does not have an appropriate configuration considering heat exchange efficiency of a heat exchanger and pressure loss of the heat exchanger and an electric discharge/electric field-generating device when a propeller type axial fan is used as a blower fan. The same applies to a case where a line flow fan is used as a blower fan.

The present invention is achieved to solve such problems, and has an object to provide an air conditioning apparatus that can reduce an influence exerted on an air flow of a blower fan, provide high heat exchange efficiency of a heat exchanger, reduce pressure loss of the heat exchanger and an electric discharge/electric field-generating device, and prevent a reduction in air volume or generation of noise.

### Means for Solving the Problems

An air conditioning apparatus according to the present invention includes: a body having an air intake port and an air outlet port; a blower fan placed on a downwind side of the air intake port in the body, the blower fan configured to form an air flow that takes air from the air intake port into the body and discharges air from the air outlet port; a heat exchanger provided on the downwind side of the blower fan in the body; and an electric discharge and field generator provided on a upwind side of the heat exchanger in an air trunk of the air flow in the body, the electric discharge and field generator having a box-shaped frame having two opening surfaces respectively positioned on the upwind side and the downwind side, the electric discharge and field generator housing a discharge electrode and a counter electrode in the box-shaped frame, wherein the heat exchanger is placed to have a section of an inverted V or W shape with a vertex being directed toward the upwind side, wherein the opening surface on the downwind side of the frame faces an end surface on the upwind side of the heat exchanger, and is placed to be tilted by 5 degrees and more to 20 degrees or less with respect to the end surface, wherein the counter electrode has an electrode surface placed to be tilted by 15 degrees and more to 30 degrees or less with respect to the opening surface on the downwind side of the frame.

### Advantageous Effects of Invention

The air conditioning apparatus according to the present invention can reduce an influence exerted on an air flow of a blower fan, particularly reduce pressure loss of an electric discharge/electric field-generating device, and prevent a reduction in air volume or generation of noise.

### Brief Description of the Drawings

Figure 1 is a sectional view of an air conditioning apparatus relating to Embodiment 1 of the present invention.
Figure 2 is an exploded perspective view of an electric discharge/electric field-generating device provided in the air conditioning apparatus relating to Embodiment 1 of the present invention.
Figure 3 is a sectional view of the electric discharge/electric field-generating device provided in the air conditioning apparatus relating to Embodiment 1 of the present invention.
Figure 4 is an enlarged sectional view of a portion where the electric discharge/electric field-generating device is provided in the air conditioning apparatus relating to Embodiment 1 of the present invention.
Figure 5 shows power consumption of the air conditioning apparatus when an inflow angle of wind is changed with respect to a counter electrode of the electric discharge/electric field-generating device relating to Embodiment 1 of the present invention.
Figure 6 is a sectional view of another air conditioning apparatus relating to Embodiment 1 of the present invention.
Figure 7 is an enlarged sectional view of a portion where an electric discharge/electric field-generating device is provided in another air conditioning apparatus relating to Embodiment 1 of the present invention.

### Description of Embodiments

The present invention will be described with reference to the accompanying drawings. The same reference numerals denote the same or corresponding components throughout the drawings, and overlapping descriptions will be simplified or omitted.

### Embodiment 1

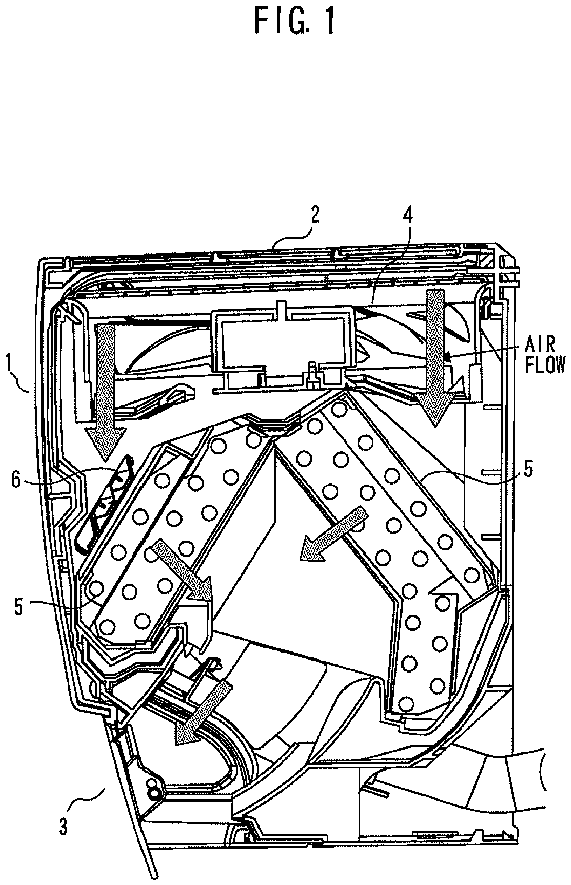

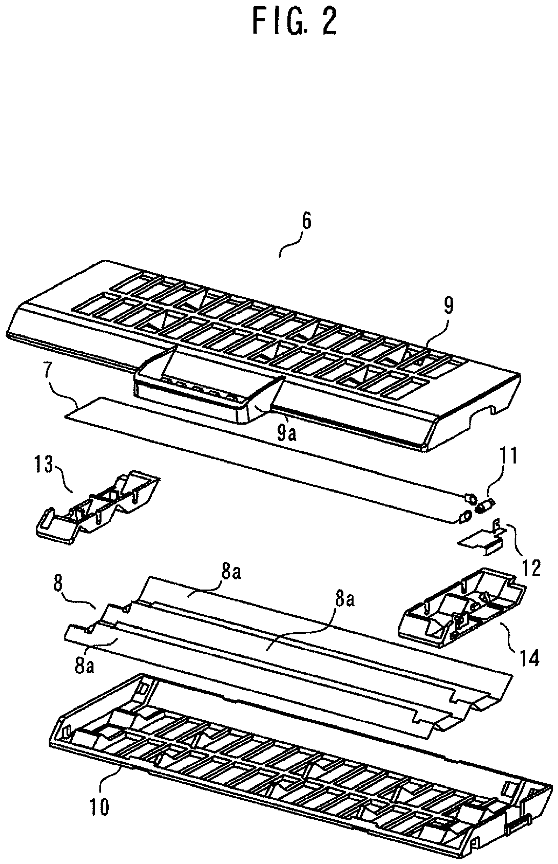

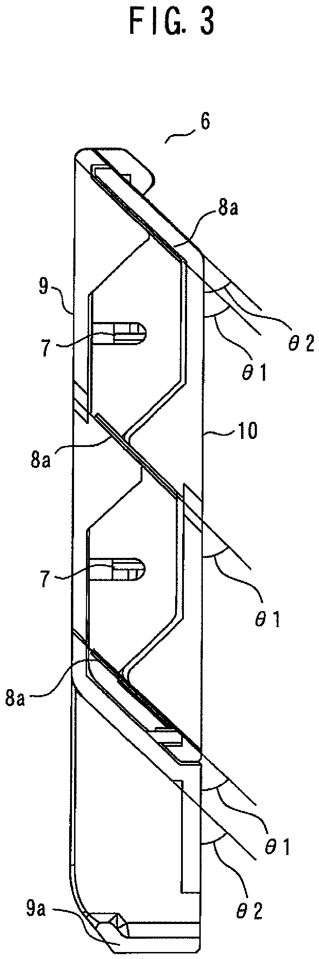

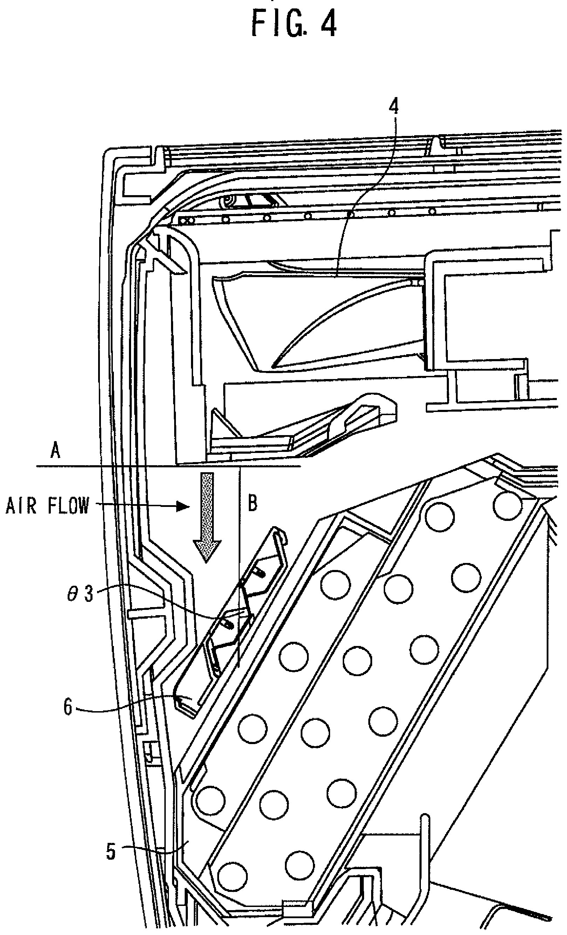

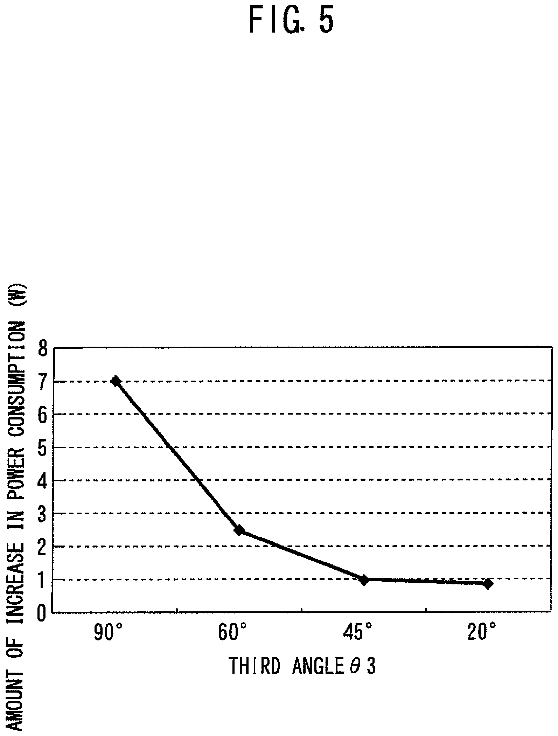

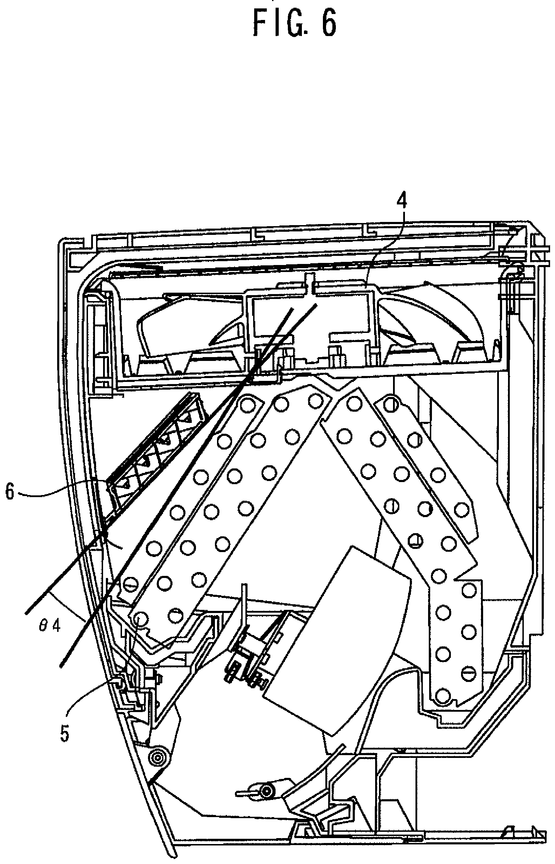

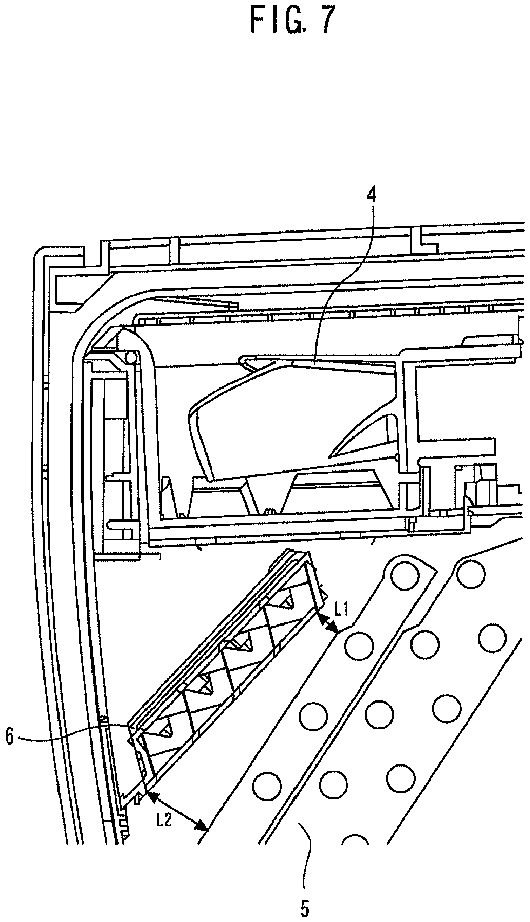

Figures 1 to 5 relate to Embodiment 1 of the present invention, Figure 1 is a sectional view of an air conditioning apparatus, Figure 2 is an exploded perspective view of an electric discharge/electric field-generating device provided in the air conditioning apparatus, Figure 3 is a sectional view of the electric discharge/electric field-generating device provided in the air conditioning apparatus, Figure 4 is an enlarged sectional view of a portion where the electric discharge/electric field-generating device is provided in the air conditioning apparatus, Figure 5 shows power consumption of the air conditioning apparatus when an inflow angle of wind is changed with respect to a counter electrode of the electric discharge/electric field-generating device, Figure 6 is a sectional view of another air conditioning apparatus, and Figure 7 is an enlarged sectional view of a portion where an electric discharge/electric field-generating device is provided in another air conditioning apparatus.

In Figure 1, reference numeral 1 denotes an air conditioning apparatus body. In an upper portion of the air conditioning apparatus body 1, an air intake port 2 is provided that is an opening for taking air from outside into the air conditioning apparatus body 1. In a front lower portion of the air conditioning apparatus body 1, an air outlet port 3 is provided that is an opening for discharging air from an inside of the air conditioning apparatus body to the outside. An air trunk that provides communication between the air intake port 2 and the air outlet port 3 is formed in the air conditioning apparatus body 1.

On the air trunk on an immediately downwind side of the air intake port 2 in the air conditioning apparatus body 1, a blower fan 4 is provided for forming an air flow for taking air from the air intake port 2 into the air conditioning apparatus body 1, and discharging treated air from the air outlet port 3 to the outside of the air conditioning apparatus body 1. The blower fan 4 is a propeller type axial fan.

A heat exchanger 5 is provided on the air trunk on a downwind side of the blower fan 4 in the air conditioning apparatus body 1. The heat exchanger 5 is formed so that two substantially plate-like portions are placed to have a section of a substantially inverted V shape. An apex of the substantially inverted V shape of the heat exchanger 5 is directed to the upwind side, that is, toward the blower fan 4. The heat exchanger 5 may have a section of a substantially inverted W shape instead of the substantially inverted V shape. Further, the heat exchanger 5 may have a section of one or more continuous substantially inverted V shapes.

On the air trunk on a upwind side of the heat exchanger 5 and on the downwind side of the blower fan 4 in the air conditioning apparatus body 1, an electric discharge/electric field-generating device 6 is provided. The electric discharge/electric field-generating device 6 forms a discharge space and an electric field space in air flowing through the air trunk to sterilize and inactivate bacteria, mold, allergens, viruses, or the like in the flowing air.

With reference to Figures 2 and 3, a configuration of the electric discharge/electric field-generating device 6 will be described in detail. The electric discharge/electric field-generating device 6 includes a discharge electrode 7 and a counter electrode 8. A voltage is applied between the electrodes to cause corona discharge and generate the discharge space and the electric field space in the air. The discharge electrode 7 and the counter electrode 8 are housed in a box-shaped frame constituted by an upper frame 9 and a lower frame 10 made of resin.

An upper surface of the upper frame 9 and a lower surface of the lower frame 10 are placed substantially in parallel when the upper frame 9 and the lower frame 10 are assembled into a box shape. The upper surface of the upper frame 9 and the lower surface of the lower frame 10 have openings for taking air flowing through the air trunk into the frames. The upper surface of the upper frame 9 and the lower surface of the lower frame 10 having the openings are hereinafter sometimes referred to as "opening surfaces". A grid-like guard is provided in the opening for preventing foreign matter from coming into contact with the discharge electrode 7 and the counter electrode 8 housed in the frames.

The discharge electrode 7 and the counter electrode 8 are formed of electric conductors. Specifically, the discharge electrode 7 and the counter electrode 8 are made of metal such as tungsten, copper, nickel, zinc, or iron, or alloys such as stainless mainly consisting of such metal, or such metal or alloys plated with noble metal such as silver, gold, or platinum.

The discharge electrode 7 has an elongated plate shape (in other words, a flat band shape) having a substantially rectangular section with short and long sides. The long side of the substantially rectangular section has a length of 0.1 to 1.0 mm, and the short side has a length of about one tenth of that of the long side, that is, 0.01 to 0.1 mm.

Ring-like terminals are mounted to opposite ends in a longitudinal direction of the discharge electrode 7. A metal spring 11 that urges to apply tension to the discharge electrode 7 is mounted to the ring-like terminals. A connecting portion between the ring-like terminals at the opposite ends of the discharge electrode 7 and the spring 11 is mounted to a power feeding unit 12 made of metal. The power feeding unit 12 is connected to a power supply (not shown), and a voltage of 4 to 7 kV is supplied from the power supply to the discharge electrode 7 via the power feeding unit 12. The counter electrode 8 is grounded.

The discharge electrode 7 is folded about twice to four times (here twice) and mounted in the upper frame 9 and the lower frame 10. An electrode surface 8a of the counter electrode 8 is placed to face the discharge electrode 7. At this time, the electrode surface 8a of the counter electrode 8 is placed to be tilted by a predetermined first angle θ1 with respect to a direction perpendicular to the opening surfaces of the frames (upper frame 9 and lower frame 10) (see Figure 3). The discharge electrode 7 is placed with the short side of its section being on the upwind side, thereby reducing pressure loss of an air flow passing through the electric discharge/electric field-generating device 6.

The discharge electrode 7 and the counter electrode 8 are secured by a right electrode support member 13 and a left electrode support member 14 made of resin in the frames (upper frame 9 and lower frame 10) with the placement and state as described above.

Two surfaces: a front side surface 15 and a rear side surface 16 of the frames (upper frame 9 and lower frame 10) are provided to be tilted by a predetermined second angle θ2 with respect to the direction perpendicular to the opening surfaces of the frames. The first angle θ1 is substantially equal to the second angle θ2, and in other words, the electrode surface 8a of the counter electrode 8 is substantially parallel to the front side surface 15 and the rear side surface 16 of the frames. On a front surface of the upper frame 9, a handle 9a is provided that is gripped when the electric discharge/electric field-generating device 6 is attached to or detached from the air conditioning apparatus body 1.

With reference to Figure 4, the placement of the electric discharge/electric field-generating device 6 configured as described above in the air conditioning apparatus body 1 will be described.

First, the electric discharge/electric field-generating device 6 is provided on the air trunk on the upwind side of the heat exchanger 5 and on the downwind side of the blower fan 4 as described above. The opening surface on the downwind side of the frame of the electric discharge/electric field-generating device 6 faces the end surface on the upwind side of the heat exchanger 5, and placed in substantially parallel with the end surface. Alternatively, the opening surface faces the end surface and is placed be tilted with respect to the end surface so that a distance between the opening surface and the end surface gradually increases toward the handle 9a (a side farther from the blower fan 4).

The blower fan 4 is a propeller type axial fan, and thus an air flow generated by the blower fan 4 is parallel to the rotating shaft of the blower fan 4, that is, in a direction indicated by B and an arrow in Figure 4 perpendicular to a lower surface (A in Figure 4) of the blower fan 4.

As described above, the heat exchanger 5 is placed to have the section of the substantially inverted V shape with the vertex being directed to the upwind side. Although not shown, the heat exchanger 5 may be placed to have a section of a substantially inverted W shape including two substantially inverted V shapes, instead of the section of the substantially inverted V shape, in order to increase an amount of heat exchange. An angle formed between the end surface on the upwind side of the heat exchanger 5 and the direction (B in Figure 4) of the air flow generated by the blower fan 4 is determined in view of pressure loss of the air flow, a surface area of a contact portion between the air flow and the heat exchanger 5, heat exchange efficiency, or the like.

The end surface on the upwind side of the heat exchanger 5 thus determined to be placed and the opening surface on the downwind side of the frame of the electric discharge/electric field-generating device 6 are substantially in parallel, or tilted so that the distance therebetween gradually increases toward the handle 9a, and the electrode surface 8a of the counter electrode 8 is provided to be tilted by the first angle θ1 in the direction of the air flow from the blower fan 4 with respect to the direction perpendicular to the opening surface. Thus, the electrode surface 8a of the counter electrode 8 is placed to be tilted by a predetermined third angle θ3 with respect to the direction (B in Figure 4) of the air flow from the blower fan 4. More precisely, the third angle θ3 is an angle formed by the section of the electrode surface 8a with respect to the direction of the air flow from the blower fan 4 on the section perpendicular to the electrode surface 8a.

With the above described relationship, the third angle θ3 can be uniquely derived from the angle formed between the end surface on the upwind side of the heat exchanger 5 and the direction of the air flow from the blower fan 4, an angle (forth angle θ4 described later) formed between the opening surface on the downwind side of the frame of the electric discharge/electric field-generating device 6 and the end surface on the upwind side of the heat exchanger 5, and the first angle θ1. Specifically, with the angle formed between the end surface on the upwind side of the heat exchanger 5 and the direction of the air flow from the blower fan 4, the first angle θ1 as the angle formed between the electrode surface 8a and the opening surface of the electric discharge/electric field-generating device 6, and the angle (forth angle θ4) formed between the opening surface on the downwind side of the frame of the electric discharge/electric field-generating device 6 and the end surface on the upwind side of the heat exchanger 5 are changed to adjust the third angle θ3 as a tilt angle of the electrode surface 8a of the counter electrode 8 with respect to the direction of the air flow from the blower fan 4.

With reference to Figures 1 to 4, an operation of the air conditioning apparatus body 1 configured as described above will be described mainly noting the air flow in the air conditioning apparatus body 1. In the drawings, the arrows indicate an air flow in the air trunk formed in the air conditioning apparatus body 1. When the blower fan 4 is rotated, air is taken from the air intake port 2 into the air conditioning apparatus body 1, and an air flow generated by the blower fan 4 is fed to the heat exchanger 5. At this time, the blower fan 4 is a propeller type axial fan, and in a portion close to the blower fan 4, a flow speed on a side closer to the shaft is relatively low, and a flow speed on an outer side with the rotatory blades is relatively high.

The heat exchanger 5 is placed to have the section of the substantially inverted V shape with the vertex being directed toward the blower fan 4, and the vertex of the substantially inverted V shape faces the rotating shaft of the blower fan 4. The blower fan 4 and the heat exchanger 5 are in such a positional relationship, and thus a portion with a relatively high flow speed of the air flow generated by the blower fan 4 can be efficiently fed to the heat exchanger 5. The air flow having passed through the heat exchanger 5 is merged inside the substantially inverted V shape, and discharged from the air outlet port 3 to the outside of the air conditioning apparatus body 1.

On the air trunk on the upwind side of the heat exchanger 5 and the downwind side of the blower fan 4, the electric discharge/electric field-generating device 6 is provided. The blower fan 4 sucks bacteria, mold, virus, or the like suspended in air into the air conditioning apparatus body 1. When passing through the electric discharge/electric field-generating device 6, the sucked suspended bacteria, mold, virus, or the like are destroyed and killed by application of a discharge and an electric field between the discharge electrode 7 and the counter electrode 8. From the air discharged from the air outlet port 3, living suspended bacteria, mold, viruses, or the like are removed.

When the propeller type axial fan is placed as the blower fan 4 on an upstream side of the heat exchanger 5, sucked air is forced into the heat exchanger 5. Thus, as compared to a case where the propeller type axial fan is placed on a downstream side of the heat exchanger 5 to suck air into the heat exchanger 5, wind speed distribution on the upstream side of the heat exchanger 5 is non-uniform to easily cause differences in wind speed, which increases pressure loss when the air flow passes through the electric discharge/electric field-generating device 6. In particular, the wind speed distribution is larger close to the outer side of the blower fan 4 than on a central portion close to the shaft.

There is a large space between the front surface side of the heat exchanger 5 of the substantially inverted V shape and a front panel of the air conditioning apparatus body 1, which is suitable for providing the electric discharge/electric field-generating device 6. However, this space is located downstream of the outer side of the blower fan 4 (the portion with the blades of the blower fan), thus wind speed distribution is non-uniform to easily cause differences in wind speed, and cause variations in wind speed when air passes through the electric discharge/electric field-generating device 6, thereby preventing a stable air cleaning capacity from being exerted.

The opening surface on the downwind side of the frame of the electric discharge/electric field-generating device 6 is placed to face the end surface on the upwind side of the heat exchanger 5, and the electrode surface 8a of the counter electrode 8 of the electric discharge/electric field-generating device 6 is tilted by the predetermined first angle θ1 with respect to the direction perpendicular to the opening surface of the frame of the electric discharge/electric field-generating device 6, and is thus placed to be tilted by the predetermined third angle θ3 with respect to the direction (B in Figure 4) of the air flow from the blower fan 4. The opening surface on the upwind side of the frame of the electric discharge/electric field-generating device 6 is also placed substantially in parallel with the end surface on the upwind side of the heat exchanger 5, and tilted with respect to the direction of the air flow from the blower fan 4.

Thus, the air flow from the blower fan 4 can flow into the electric discharge/electric field-generating device 6 without resistance, and air can flow with reduced generation of pressure loss. This can prevent generation of noise and an increase in power consumption.

Figure 5 shows an amount of increase in power consumption of the air conditioning apparatus body 1 when the third angle θ3 as the tilt angle of the electrode surface 8a of the counter electrode 8 with respect to the direction of the air flow from the blower fan 4 is changed. As shown in Figure 5, when the third angle θ3 is 90°, the amount of increase in power consumption is about 7 W. When the third angle θ3 is changed to 60°, the amount of increase in power consumption is reduced to about 2.5 W. Further, when the third angle θ3 is changed to 45°, the amount of increase in power consumption is reduced to about 1 W. When the third angle θ3 is 20°, the amount of increase in power consumption is less than about 0.5 W, which has little influence on aerodynamic performance and does not increase a fan input. A smaller third angle θ3 as the tilt angle of the electrode surface 8a of the counter electrode 8 with respect to the direction of the air flow from the blower fan 4 is preferable, and 0° is the most preferable.

As such, the third angle θ3 is set to 45° or less, thereby reducing the amount of increase in power consumption of the air conditioning apparatus body 1 to about 1 W or less. Thus, the first angle θ1 is preferably set so that the third angle θ3 is 45° or less.

However, if the first angle θ1 is tilted to 45° or more, a shortest distance between the discharge electrode 7 and the counter electrode 8 is reduced to cause a local discharge. Also, a distance between the discharge electrode 7 and the counter electrode 8 is non-uniform to prevent a stable discharge. Thus, the first angle θ1 is preferably set to 45° or less.

As such, the first angle θ1 is tilted and the tilt angle (third angle θ3) of the counter electrode 8 is closer to parallel to the direction of the air flow, thereby reducing pressure loss. However, even if the first angle θ1 is tilted, large pressure loss sometimes still occurs.

In such a case, as shown in Figure 6, the opening surface on the downwind side of the frame of the electric discharge/electric field-generating device 6 is placed to be tilted toward the air intake port 2 by a predetermined fourth angle θ4 with respect to the end surface on the upwind side of the heat exchanger 5. Figure 7 shows a state where the opening surface on the downwind side of the frame of the electric discharge/electric field-generating device 6 is placed to be tilted toward the air intake port 2 by the predetermined fourth angle θ4 with respect to the end surface on the upwind side of the heat exchanger 5 in a distance relationship between the opening surface and the end surface.

As shown in Figure 7, for a shortest distance L between the opening surface on the downwind side of the frame of the electric discharge/electric field-generating device 6 and the end surface on the upwind side of the heat exchanger 5, a distance L1 in a position closer to the shaft of the blower fan 4 and farther from the outer side of the blower fan 4 is compared with a distance L2 in a position closer to the outer side of the blower fan 4 and farther from the shaft of the blower fan 4, and then L1 is equal to or smaller than L2.

This can reduce the angle θ3 close to 0° formed between the counter electrode 8 of the electric discharge/electric field-generating device 6 and the air flow, reduce pressure loss, and prevent an increase in power consumption of the blower fan 4. This can also eliminate non-uniform wind speed distribution particularly on the outer side of the blower fan 4, which is a problem peculiar to the propeller fan, and increase heat exchange efficiency closer to the upstream side of the heat exchanger 5.

Generally, if air is sucked from a top surface side of the air conditioning apparatus body 1, the air substantially vertically proceeds. An upper front surface side unit of the heat exchanger 5 is tilted by about 30° to 45° with respect to the vertical direction, and thus when the electric discharge/electric field-generating device 6 is provided in parallel with the heat exchanger 5, and the counter electrode 8 is placed perpendicularly to the opening surface of the electric discharge/electric field-generating device 6, there is a shift in angle of about 30° to 45° between the direction B of the air flow and the counter electrode 8, thereby causing pressure loss of the air flow passing through the electric discharge/electric field-generating device 6.

It is preferable to minimize the angle (third angle θ3) formed between the counter electrode 8 and the air flow B in terms of a reduction in pressure loss. Thus, as described above, the counter electrode 8 is placed to be tilted from the direction perpendicular to the opening of the electric discharge/electric field-generating device 6, and further, the electric discharge/electric field-generating device 6 is placed to be tilted toward the air intake port 2 with respect to the heat exchanger 5. Then, a synergistic effect of the tilted placement can minimize the angle θ3 formed between the counter electrode 8 and the air flow B while maintaining a stable discharge state between the discharge electrode 7 and the counter electrode 8 in the electric discharge/electric field-generating device 6.

Specifically, with increasing angle of tilt of the counter electrode 8 from the direction perpendicular to the opening of the electric discharge/electric field-generating device 6, stability of a discharge between the discharge electrode 7 and the counter electrode 8 is reduced. Also, if the angle of tilt of the electric discharge/electric field-generating device 6 toward the air intake port 2 (with the front surface side of the electric discharge/electric field-generating device 6 being lifted) with respect to the heat exchanger 5 is increased, a tip of the front surface side of the electric discharge/electric field-generating device 6 comes into contact with a structure of the air conditioning apparatus body 1, thereby preventing the electric discharge/electric field-generating device 6 from being housed on the upwind side of the heat exchanger 5.

Thus, the first angle θ1 is set to 45° or less (preferably 15° to 30° for making the distance between the electrodes as uniform as possible and stabilizing the discharge), and the tilt angle θ4 toward the air intake port 2 of the electric discharge/electric field-generating device 6 is set to about 5° to 20°. Thus, a synergistic effect of the tilted placement allows the angle formed between the counter electrode 8 and the air flow B to be closest to 0° with a stable air cleaning capacity.

The second angle θ2 formed between the front side surface 15 and the rear side surface 16 of the frame of the electric discharge/electric field-generating device 6 and the direction perpendicular to the opening surface of the frame is equal to the first angle θ1. Specifically, the front side surface 15 and the rear side surface 16 as two side surfaces of the frame are placed substantially in parallel with the electrode surface 8a, the front side surface 15 and the rear side surface 16 of the frame form walls to prevent generation of pressure loss, thereby reducing pressure loss of the air flow in and around the electric discharge/electric field-generating device 6. Also, the air flow can smoothly flow into the heat exchanger 5.

Further, the opening of the frame of the electric discharge/electric field-generating device 6 has a grid shape, thereby producing a straightening effect and reducing non-uniform wind speed distribution or differences in wind speed that tends to occur in a portion close to the outer side of the propeller type axial fan or around a peripheral portion of the air conditioning apparatus body 1.

The electric discharge/electric field-generating device 6 is provided downstream of the propeller type axial fan and upstream of the heat exchanger 5, and thus the electric discharge/electric field-generating device 6 itself functions as a straightening vane to make wind speed distribution uniform, and can eliminate a swirling flow component generated by the propeller type axial fan and increase by about 1% to 3% heat exchange efficiency on the upstream side of the heat exchanger 5.

Summarizing the above, the electrode surface 8a of the counter electrode 8 of the electric discharge/electric field-generating device 6 is placed to be tilted by the predetermined angle θ1 in the direction of the air flow of the blower fan 4 with respect to the direction perpendicular to the opening surface on the downwind side of the frame of the electric discharge/electric field-generating device 6, and the opening surface on the downwind side of the frame of the electric discharge/electric field-generating device 6 is placed to be tilted by the predetermined angle θ4 toward the air intake port with respect to the end surface on the upwind side of the heat exchanger 5. Thus, the angle θ3 formed between the direction B of the air flow from the blower fan 4 and the counter electrode 8 is further close to 0° and significantly reduced. This can minimize pressure loss and power consumption of the blower fan 4.

The case where the propeller type axial fan is used as the blower fan 4 has been mainly described above, but the same advantage can be obtained when a different fan such as a line flow fan is used as the blower fan 4 and particularly when it has a configuration in which an air intake port 2 is placed in an upper portion of an air conditioning apparatus body 1.

The air conditioning apparatus configured as described above is an air conditioning apparatus including: a body having an air intake port and an air outlet port; a blower fan that is placed on a downwind side of the air intake port in the body, and forms an air flow that takes air from the air intake port into the body and discharges air from the air outlet port, wherein the apparatus further includes: a heat exchanger provided on the downwind side of the air intake port in the body; and an electric discharge/electric field-generating device that is provided on a upwind side of the heat exchanger on an air trunk of the air flow in the body, and houses a discharge electrode and a counter electrode in a box-shaped frame having opening surfaces on the upwind side and the downwind side, the heat exchanger is placed to have a section of an inverted V or W shape with a vertex being directed toward the blower fan, and the opening surface on the downwind side of the frame of the electric discharge/electric field-generating device faces an end surface on the upwind side of the heat exchanger, and is placed to be tilted in a direction of the air flow of the blower fan.

Thus, the angle formed between the counter electrode and the air flow is close to 0°, thereby reducing pressure loss of the counter electrode and reducing power consumption of the blower fan. Also, wind speed distribution of the electric discharge/electric field-generating device can be made uniform to exert a stable air cleaning capacity. Further, the wind speed distribution downstream of the electric discharge/electric field-generating device can be also made uniform to increase heat exchange efficiency on the upstream side of the heat exchanger placed downstream of the electric discharge/electric field-generating device.

### Industrial Applicability

The present invention can be applied to an air conditioning apparatus including: a body having an air intake port and an air outlet port; a blower fan that is placed on a downwind side of the air intake port in the body, and forms an air flow that takes air from the air intake port into the body and discharges air from the air outlet port. Specifically, the present invention can be applied to products such as an air conditioner, a hand drier, an air cleaner, a humidifier, a dehumidifier, or a refrigerator.

### Description of Symbols

- 1: air conditioning apparatus body
- 2: air intake port
- 3: air outlet port
- 4: blower fan
- 5: heat exchanger
- 6: electric discharge/electric field-generating device
- 7: discharge electrode
- 8: counter electrode
- 8a: electrode surface
- 9: upper frame
- 9a: handle
- 10: lower frame
- 11: metal spring
- 12: power feeding unit
- 13: right electrode support member
- 14: left electrode support member
- 15: front side surface of frames
- 16: rear side surface of frames

## Claims

1. An air conditioning apparatus comprising:
a body (1) having an air intake port (2) and an air outlet port (3);
a blower fan (4) placed on a downwind side of the air intake port (2) in the body (1), the blower fan (4) configured to form an air flow that takes air from the air intake port (2) into the body (1) and discharges air from the air outlet port (3);
a heat exchanger (5) provided on the downwind side of the blower fan (4) in the body (1); and
an electric discharge and field generator (6) provided on a upwind side of the heat exchanger (5) in an air trunk of the air flow in the body (1), the electric discharge and field generator (6) having a box-shaped frame (9, 10) having two opening surfaces respectively positioned on the upwind side and the downwind side, the electric discharge and field generator (6) housing a discharge electrode (7) and a counter electrode (8) in the box-shaped frame (9, 10), wherein
the heat exchanger (5) is placed to have a section of an inverted V or W shape with a vertex being directed toward the upwind side, wherein
the opening surface on the downwind side of the frame (9, 10) faces an end surface on the upwind side of the heat exchanger (5), **characterized in that**
the opening surface on the downwind side of the frame (9, 10) is placed to be tilted by 5 degrees and more to 20 degrees or less with respect to the end surface, wherein
the counter electrode (8) has an electrode surface (8a) placed to be tilted by 15 degrees and more to 30 degrees or less with respect to the opening surface on the downwind side of the frame (9, 10).

2. The air conditioning apparatus according to claim 1, wherein
the discharge electrode (7) has an elongated plate shape which has a rectangular section with short and long sides, and the long side is placed right-angled with respect to the opening surface on the downwind side of the frame (9, 10).

3. The air conditioning apparatus according to claim 1 or 2, wherein
a front side surface and a rear side surface of the frame (9, 10) are placed in parallel with the electrode surface (8a) of the counter electrode.

4. The air conditioning apparatus according to any of claims 1 to 3, wherein
the heat exchanger (5) is placed to have a section of an inverted V shape with a vertex being directed toward the blower fan (4), and
the vertex of the section of inverted V shape is placed to face a rotating shaft of the blower fan (4).

## Patentansprüche

1. Klimaanlage, umfassend:
einen Körper (1) mit einer Lufteinlassöffnung (2) und einer Luftauslassöffnung (3);
einen Gebläseventilator (4), der auf einer Leeseite der Lufteinlassöffnung (2) im Körper (1) angeordnet ist, wobei der Gebläseventilator (4) eingerichtet ist, einen Luftstrom zu bilden, der Luft von der Lufteinlassöffnung (2) in den Körper (1) einbringt und Luft aus der Luftauslassöffnung (3) auslässt;
einen Wärmetauscher (5), der auf der Leeseite des Gebläseventilators (4) im Körper (1) vorgesehen ist; und
einen Elektrische-Entladung-und-Feld-Generator (6), der auf einer Luvseite des Wärmetauschers (5) in einem Luftkanal (Airtrunk) des Luftstroms im Körper (1) vorgesehen ist, wobei der Elektrische-Entladung-und-Feld-Generator (6) einen kastenförmigen Rahmen (9, 10) mit zwei Öffnungsoberflächen aufweist, die jeweils auf der Luvseite und der Leeseite angeordnet sind, wobei der Elektrische-Entladung-und-Feld-Generator (6) eine Entladungselektrode (7) und eine Gegenelektrode (8) im kastenförmigen Rahmen (9, 10) enthält, wobei
der Wärmetauscher (5) so angeordnet ist, dass er einen Abschnitt mit einer umgekehrten V- oder W-Form aufweist, mit einem Scheitelpunkt, der zur Luvseite gerichtet ist, wobei
die Öffnungsoberfläche auf der Leeseite des Rahmens (9, 10) einer Endoberfläche auf der Luvseite des Wärmetauschers (5) zugewandt ist, **dadurch gekennzeichnet, dass**
die Öffnungsoberfläche auf der Leeseite des Rahmens (9, 10) angeordnet ist, so dass sie um 5 Grad und mehr bis 20 Grad oder weniger in Bezug auf die Endoberfläche geneigt ist, wobei
die Gegenelektrode (8) eine Elektrodenoberfläche (8a) aufweist, die angeordnet ist, so dass sie um 15 Grad und mehr bis 30 Grad oder weniger in Bezug auf die Öffnungsoberfläche auf der Leeseite des Rahmens (9, 10) geneigt ist.

2. Klimaanlage nach Anspruch 1, wobei
die Entladungselektrode (7) eine längliche Plattenform aufweist, die einen rechteckigen Abschnitt mit kurzen und langen Seiten aufweist, und die lange Seite rechtwinklig zur Öffnungsoberfläche auf der Leeseite des Rahmens (9, 10) angeordnet ist.

3. Klimaanlage nach Anspruch 1 oder 2, wobei
eine vordere Seitenoberfläche und eine hintere Seitenoberfläche des Rahmens (9, 10) parallel zur Elektrodenoberfläche (8a) der Gegenelektrode angeordnet sind.

4. Klimaanlage nach einem der Ansprüche 1 bis 3, wobei der Wärmetauscher (5) angeordnet ist, so dass er einen Abschnitt mit einer umgekehrten V-Form aufweist, mit einem Scheitelpunkt, der dem Gebläseventilator (4) zugewandt ist, und
der Scheitelpunkt des Abschnitts mit umgekehrter V-Form angeordnet ist, so dass er einer rotierenden Welle des Gebläseventilators (4) zugewandt ist.

## Revendications

1. Appareil de climatisation comprenant :
un corps (1) présentant un orifice d'entrée d'air (2) et un orifice de sortie d'air (3) ;
un ventilateur de soufflante (4) placé du côté sous le vent de l'orifice d'entrée d'air (2) dans le corps (1), le ventilateur de soufflante (4) étant configuré pour former un flux d'air qui prend l'air à partir de l'orifice d'entrée d'air (2) dans le corps (1), et qui évacue l'air à partir de l'orifice de sortie d'air (3) ;
un échangeur de chaleur (5) disposé du côté sous le vent du ventilateur de soufflante (4) dans le corps (1) ; et
un générateur de décharge et de champ électriques (6) disposé du côté face au vent de l'échangeur de chaleur (5) dans une manchette du flux d'air dans le corps (1), le générateur de décharge et de champ électriques (6) présentant un bâti en forme de boîte (9, 10) présentant deux surfaces ouvertes placées respectivement du côté face au vent et du côté sous le vent, le générateur de décharge et de champ électriques (6) logeant une électrode de décharge (7) et une contre-électrode (8) dans le bâti en forme de boîte (9, 10), où
l'échangeur de chaleur (5) est placé de façon à présenter une section en forme de V inversé ou de W inversé avec un sommet orienté sur le côté face au vent, où
la surface ouverte du côté sous le vent du bâti (9, 10) fait face à une surface d'extrémité du côté face au vent de l'échangeur de chaleur (5), **caractérisé en ce que**
la surface ouverte du côté sous le vent du bâti (9, 10) est placée de façon à être inclinée de 5 degrés ou plus, et jusqu'à 20 degrés ou moins, par rapport à la surface d'extrémité, où
la contre-électrode (8) présente une surface d'électrode (8a) placée de façon à être inclinée de 15 degrés ou plus, et jusqu'à 30 degrés ou moins, par rapport à la surface ouverte du côté sous le vent du bâti (9, 10).

2. Appareil de climatisation selon la revendication 1, où
l'électrode de décharge (7) présente une forme de plaque allongée qui présente une section rectangulaire avec des côtés courts et longs, et le long côté est placé à angle droit par rapport à la surface ouverte du côté sous le vent du bâti (9, 10).

3. Appareil de climatisation selon la revendication 1 ou 2, où
une surface du côté avant et une surface du côté arrière du bâti (9, 10) sont placées parallèlement à la surface d'électrode (8a) de la contre-électrode.

4. Appareil de climatisation selon l'une quelconque des revendications 1 à 3, où
l'échangeur de chaleur (5) est placé de façon à présenter une section en forme de V inversé avec un sommet orienté vers le ventilateur de soufflante (4), et
le sommet de la section en forme de V inversé est placé de façon à faire face à l'axe de rotation du ventilateur de soufflante (4).
